# FASCICULE DE BREVET EUROPEEN

(11) **EP 3 606 819 B1**
(45) Date de publication et mention de la délivrance du brevet: **12.01.2022**
(21) Numéro de dépôt: 18717020.4
(22) Date de dépôt: 06.04.2018
(51) Int. Cl.: B64D 11/00

(54) **SYSTEME DE SUIVI A DISTANCE D'UNE ZONE DESTINEE A ACCUEILLIR AU MOINS UN PASSAGER D'UN AVION ET CABINE D'AVION EQUIPEE D'UN TEL SYSTEME DE SUIVI A DISTANCE**
SYSTEM ZUR FERNÜBERWACHUNG EINES BEREICHS ZUR AUFNAHME VON MINDESTENS EINEM PASSAGIER EINES FLUGZEUGS UND FLUGZEUGKABINE MIT SOLCH EINEM FERNÜBERWACHUNGSSYSTEM
SYSTEM FOR REMOTE MONITORING OF AN AREA INTENDED TO ACCOMMODATE AT LEAST ONE PASSENGER OF AN AEROPLANE AND AEROPLANE CABIN EQUIPPED WITH SUCH A REMOTE MONITORING SYSTEM

(30) Priorité: 07.04.2017 US 201762482924 P; 18.04.2017 US 201762486777 P; 07.06.2017 FR 1755066
(43) Date de publication de la demande: 12.02.2020
(73) Titulaire: Safran, 75015 Paris (FR)
(72) Inventeur: SIVIGNON, Sébastien, 31490 Brax (FR); MARTIN, Claude, 18120 Lury Sur Arnon (FR); MARECAL, Etienne, 38090 Villefontaine (FR); BLAUWHOFF, Ramon, 2451AE Leimuiden (NL)
(74) Mandataire: Gevers & Orès
(86) Numéro de dépôt international: PCT/EP2018/058943
(87) Numéro de publication internationale: WO 2018/185332

(56) Documents cités:
- EP-A2- 0 901 963
- WO-A1-2011/014940
- WO-A2-2015/181801
- FR-A1- 3 027 718
- US-B1- 6 366 311

## Description

La présente invention est relative à un système de suivi à distance d'une zone destinée à accueillir au moins un passager d'un avion, notamment d'une zone cargo, en particulier convertie provisoirement ou définitivement et/ou de manière réversible ou irréversible, en espace cabine. L'invention concerne également une cabine d'avion équipée d'un tel système de suivi à distance.

Le document FR 3 027 718 décrit un procédé et système de surveillance et de sécurisation d'une enceinte d'avion.

Dans les avions, en particulier les avions long courrier à deux allées de circulation, un pont inférieur comprend notamment une zone cargo qui est souvent sous exploitée et/ou peu occupée. Il a ainsi déjà été envisagé de convertir la zone cargo en un espace cabine, c'est-à-dire un espace destiné à accueillir des passagers, en particulier dans des sièges pendant le vol. Un tel aménagement peut être définitif ou provisoire et/ou réalisé de manière réversible ou irréversible. Par provisoire et/ou réversible, on entend un aménagement pouvant être rapidement installé et désinstallé, selon les besoins, afin d'utiliser la zone cargo soit, de façon classique pour du transport de marchandises, soit, comme indiqué précédemment et conformément à l'invention, pour accueillir des passagers.

Le pont inférieur est rendu accessible depuis un pont supérieur accueillant habituellement les passagers et un personnel de cabine chargé de leur accueil, de leur confort et de leur sécurité. Par « personnel de cabine », on entend ici comme dans la suite de la description, l'ensemble du personnel (hôtesses, stewards, ...) intervenant et ayant une fonction opérationnelle dans l'avion pendant les diverses phases d'un vol, à l'exception de celui servant au pilotage de l'avion. De même, il est également entendu que le terme « personnel de cabine » exclut les passagers. Dans la présente description, le terme « pont supérieur » désigne les espaces traditionnels où sont assis les passagers dans un avion. Ainsi, dans le cadre d'avion du type Boeing 747 ou Airbus A380, le terme « pont supérieur » englobe les deux espaces superposés dans lesquels les passagers prennent place et sont assis.

Selon les directives et réglementations actuellement en vigueur à la date de l'invention, la présence des passagers au niveau du pont inférieur est permise uniquement pendant les périodes de vols en dehors des phases de roulage, de décollage et d'atterrissage. Pendant ces phases, tous les passagers doivent être installés au niveau du pont supérieur.

Il existe un intérêt à limiter la présence permanente du personnel de cabine au niveau du pont inférieur. En effet, il s'agit souvent d'un espace de hauteur limitée, classiquement d'environ un mètre soixante, dans lequel s'il paraît approprié de proposer à des passagers de s'y reposer en position allongée, il paraît délicat d'assurer la présence du personnel de cabine qui pourrait être amené à rester dans une position inconfortable, notamment debout, pendant de longues périodes.

La difficulté est alors d'assurer la sécurité des passagers présents au niveau du pont inférieur sans que la présence permanente de personnel de cabine soit nécessaire.

Le déposant a ainsi analysé les différents rôles du personnel de cabine sur cet aspect dans le but d'identifier ce qu'il est nécessaire de mettre en oeuvre pour surmonter cette difficulté.

Les principales situations nécessitant une intervention et/ou ou une présence du personnel de cabine sont, de manière non exhaustive, les suivantes :
- une traversée de l'avion dans des turbulences, une telle situation étant associée à la nécessité de contrôler que les passagers du pont inférieur sont correctement attachés, notamment à un siège et/ou une couchette, et/ou
- une dépressurisation de la cabine, une telle situation étant associée à la nécessité de contrôler que les passagers du pont inférieur ont pu s'équiper d'un masque à oxygène et qu'ils ont pu correctement l'ajuster, et/ou
- des difficultés de santé et/ou malaises de passagers, une telle situation étant associée à la nécessité d'une réaction appropriée du personnel de cabine, et/ou
- des menaces, en particulier provenant d'un comportement dangereux de certains passagers, une telle situation étant associée à la nécessité d'une réaction appropriée du personnel de cabine,
- des dangers, notamment provenant de l'apparition de situations périlleuses, en particulier un incendie, un risque d'incendie, une fuite de gaz ou liquide présentant un risque potentiel, une telle situation étant associée à la nécessité d'une réaction appropriée du personnel de cabine.

Par la suite, les situations identifiées précédemment seront dénommées « situations anormales ».

L'invention vise à résoudre les difficultés précédemment identifiées et propose, en ce sens, un système de suivi à distance d'une zone destinée à accueillir au moins un passager d'un avion. L'invention vise en particulier une zone cargo convertie provisoirement ou définitivement et/ou de manière réversible ou irréversible, en espace cabine.

A cet effet, le système de suivi à distance selon l'invention est tel que défini dans la revendication 1.

Grâce au système de suivi à distance selon l'invention, le personnel de cabine est en mesure, à distance, de suivre si le passager est dans des conditions de sécurité. De même, le personnel de cabine est en mesure, à distance, de détecter si des situations anormales se produisent. La présence du personnel de cabine, à tout le moins la présence permanente du personnel de cabine, au niveau du pont inférieur peut donc être évitée.

Selon des caractéristiques complémentaires de l'invention, qui peuvent être prises ensemble ou séparément :
- le moyen d'interface comprend au moins un moyen d'affichage,
- ledit moyen d'affichage comprend au moins un dispositif numérique à écran,
- le moyen d'interface comprend au moins un moyen pour émettre une alerte sonore et/ou visuelle et/ou vibratoire,
- le système de suivi à distance est configuré de façon à mettre à jour les informations relatives à la zone et/ou au passager présent dans la zone en permanence,
- le système de suivi à distance comprend en outre des moyens de traitement, notamment numériques, permettant de transmettre le signal, notamment sous forme de données numériques, au moyen d'interface,
- le système de suivi à distance comprend un réseau de transmission permettant une communication du signal entre l'organes de contrôle et les moyens de traitement et/ou des informations relatives à la zone contrôlée à distance et/ou au passager entre les moyens de traitement et le moyen d'interface,
- ledit système de suivi à distance comprend en outre des moyens de traitement des informations relatives à la zone contrôlée à distance, notamment des moyens de traitement d'images et/ou de sons, configurés pour traiter, respectivement, des images relevées par lesdites caméras et/ou des sons relevés par lesdits microphones,
- lesdits moyens de traitement d'images sont configurés pour effectuer une comparaison entre le contenu d'au moins une desdites images relevées par lesdites caméras et une ou des images de référence, pour effectuer de la détection de forme et/ou pour effectuer de la détection de mouvement,
- lesdits moyens de traitement d'images sont configurés pour détecter une forme humaine, un visage, des expressions du visage et/ou pour effectuer une localisation de passagers et/ou d'objets,
- lesdits moyens de traitement de sons sont configurés pour effectuer une détection de fréquence et/ou d'amplitude,
- lesdits moyens de traitement de sons sont configurés pour caractériser une situation particulière, pour détecter des tons de voix et/ou des bruits particuliers,
- ledit ou lesdits organes de contrôle comprennent un bouton d'alerte et/ou un bouton de signalisation.

Il sera en outre avantageux d'assurer un accueil et un confort appropriés du passager présent dans la zone contrôlée par le système de suivi à distance. Autrement dit, il sera avantageux d'utiliser les fonctionnalités du système de suivi à distance, éventuellement complété d'autres fonctionnalités, pour un accueil et un confort amélioré du passager présent dans la zone contrôlée par le système de suivi.

Pour cela, le système de suivi peut comprendre des moyens de communication permettant au personnel de cabine de se mettre en contact à distance avec le passager présent dans la zone.

Lesdits moyens de communication comprennent, par exemple, des moyens de diffusion audio et/ou des moyens de diffusion vidéo. Ils peuvent être configurés pour diffuser des informations aux passagers individuellement, en groupe ou à l'ensemble.

Les moyens de communication peuvent être configurés pour fonctionner de façon automatique, et/ou à l'initiative du personnel de cabine et/ou en interaction entre le passager présent dans la zone et le personnel de cabine.

Les moyens de communication peuvent comprendre au moins un dispositif d'alarme diffusant un message adapté à tout ou partie des passagers, notamment pour les avertir de l'existence et/ou de la nature d'une menace et/ou pour leur demander d'évacuer ladite zone contrôlée à distance.

Lesdits moyens de communication peuvent en outre comprendre des indicateurs configurés pour être activés à l'entrée d'un passager dans la zone, notamment afin de lui indiquer l'emplacement qui lui est destiné.

L'invention concerne également une cabine d'avion comprenant un système de suivi tel que décrit plus haut.

Selon différentes caractéristiques additionnelles de l'invention, qui peuvent être prises ensemble ou séparément :
- ladite zone présente une configuration de hauteur limitée,
- ladite zone présente une hauteur inférieure à 1,6 mètre,
- ladite zone est une zone cargo provisoirement équipée pour accueillir des passagers,
- ladite zone est équipée de modules de couchage pour les passagers,
- lesdits modules de couchage sont amovibles de manière à pouvoir être retirés de la zone à volonté.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

L'invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui peuvent servir à compléter la compréhension de l'invention et l'exposé de sa réalisation et, le cas échéant, contribuer à sa définition, sur laquelle est présente un exemple pratique, illustré selon une unique figure présentant, de façon schématique en coupe transversale, une cabine d'avion équipée d'un système de suivi à distance selon l'invention.

L'invention concerne un système de suivi à distance d'une zone 1 d'un avion destinée à accueillir au moins un passager, et avantageusement plusieurs passagers. La zone 1 est également appelée, dans la suite de la description, « zone contrôlée à distance ».

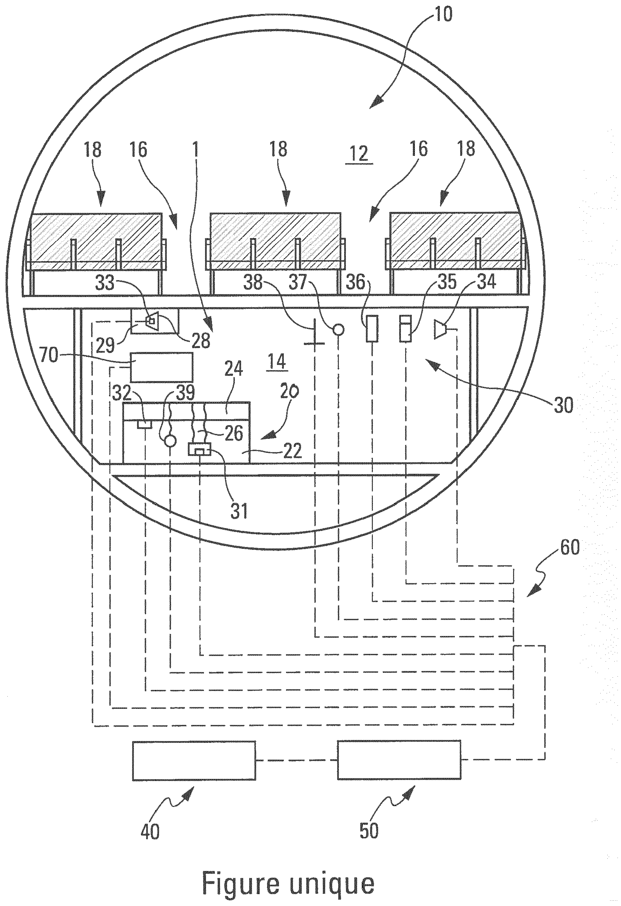

Comme illustré à la figure 1, le système de suivi à distance peut, en particulier, équiper un avion comprenant une cabine 10 présentant un pont supérieur 12 et un pont inférieur 14. Le pont inférieur 14 comprend, notamment, une zone cargo. Selon la présente invention, la zone cargo est convertie, en particulier provisoirement ou définitivement et/ou de manière réversible ou irréversible, en espace cabine.

Selon l'invention, la zone contrôlée à distance 1 est toute ou partie du pont inférieur 14, et plus particulièrement la zone cargo du pont inférieur 14. Cependant, en variante, le système de suivi à distance selon l'invention peut être chargé du suivi d'autres zones contrôlées à distance de la cabine 10, par exemple des espaces cabine accueillant des passagers, situés en particulier au niveau du pont supérieur 12, notamment des zones dans lesquelles il est difficile de maintenir la présence de personnel de cabine sur une longue période de temps. Le système de suivi à distance selon l'invention peut encore être chargé du suivi de toute ou partie d'une cabine d'avion, à pont simple ou ponts multiples, ceci dans un but de renforcement de la sécurité des passagers et/ou de réduction du personnel de cabine.

Le pont supérieur 12, illustré à titre d'exemple sur la figure, comprend deux couloirs de circulation 16 et trois rangées de sièges 18, notamment dans le but d'équiper des avions destinés à des vols long courrier. Bien sûr, un tel aménagement n'est qu'indicatif et de nombreux autres aménagements alternatifs sont possibles et entrent dans le cadre de l'invention.

Selon un exemple particulier de réalisation, la zone contrôlée à distance 1 peut présenter une configuration de hauteur limitée, par exemple une hauteur inférieure à 2 m, voire 1,8 m, voire 1,6 m, notamment en partie centrale de la zone contrôlée à distance 1.

Dans une variante spécifique de réalisation, la zone contrôlée à distance 1 est équipée, par exemple, d'au moins un module de couchage 20, avantageusement plusieurs modules de couchage 20, destiné à accueillir les passagers. Le module de couchage 20, tel qu'illustré, comprend notamment une base 22 et un matelas 24.

Le module de couchage 20 est avantageusement amovible de manière à pouvoir être retiré de la zone contrôlée à distance, à volonté ou à besoin, de façon à pouvoir redonner au pont inférieur 14 son rôle de zone cargo. Un tel changement peut avoir lieu à l'occasion de courtes périodes de maintenance de l'avion. En variante, le système de suivi à distance selon l'invention s'appliquera aussi dans le cas de ponts inférieurs munis en permanence d'un aménagement, notamment des couchettes, pour passagers.

Selon les directives et réglementations actuellement en vigueur à la date de l'invention, la zone cargo est libre de passagers pendant les phases de roulage, décollage et atterrissage. Elle ne peut être occupée qu'en dehors de ces différentes phases spécifiques.

Bien que cela ne soit pas illustré, la zone contrôlée à distance 1 est rendue accessible depuis le pont supérieur 12, par exemple à l'aide d'un escalier. Un dispositif de contrôle d'accès peut être prévu, notamment, comme évoqué plus haut, pour empêcher les passagers de pénétrer dans la zone contrôlée à distance 1 pendant les phases de roulage, décollage et atterrissage.

Selon l'invention, le système de suivi à distance comprend au moins un organe de contrôle 30. L'organe de contrôle 30 est configuré pour générer au moins un signal relatif à la sécurité du ou des passagers situés dans la zone contrôlée à distance 1.

Afin d'assurer une sécurité optimale des passagers dans la zone contrôlée à distance 1, l'organe de contrôle 30 comprend au moins un capteur permettant, individuellement ou en combinaison:
- d'indiquer et/ou de vérifier un état d'une ceinture de sécurité 26 d'au moins un passager présent dans la zone contrôlée à distance 1, notamment en cas de turbulences, et/ou
- d'indiquer et/ou de vérifier une utilisation de masques à oxygène 28, par au moins un passager présent dans la zone contrôlée à distance 1, notamment en cas de dépressurisation, et/ou
- détecter une occurrence d'une menace provenant d'un moins un passager présent dans la zone contrôlée à distance 1, et/ou
- détecter une occurrence d'une situation de danger ou périlleuse pour au moins un passager présent dans la zone contrôlée à distance 1, et/ou
- de suivre un état de santé et/ou un état de stress d'au moins un passager présent dans la zone contrôlée à distance 1.

Dans la présente description, il est fait généralement fait référence à un passager présent dans la zone contrôlée à distance 1. Toutefois, il est entendu que l'invention trouve également une application dans le cas où plusieurs passagers sont présents dans la zone contrôlée à distance 1.

L'organe de contrôle 30 comprend au moins un capteur pris parmi :
- un capteur de contact, et/ou,
- un capteur de présence, et/ou
- un capteur de force, et/ou
- un capteur micro-onde, et/ou
- un capteur de débit de gaz, et/ou
- un capteur corporel, notamment médical.

Selon l'invention, plusieurs capteurs individuels peut être intégrés dans un même organe de contrôle 30. Alternativement, l'organe de contrôle 30 comprend un capteur unique. De même, la présente invention couvre les modes de réalisation dans lesquels plusieurs des fonctions associées aux capteurs identifiés précédemment sont intégrées dans un unique capteur multifonction.

Grâce à une telle combinaison de capteurs, permettant au besoin de fonctionner en redondance, il est possible de détecter l'ensemble des situations nécessitant que le personnel de cabine soit prévenu.

Les capteurs sont avantageusement configurés pour générer et communiquer, respectivement ou combinés entre eux, au moins un signal, notamment sous forme numérique. Selon un exemple particulier de réalisation, dans le cadre de capteurs fonctionnant de façon analogique, le système de suivi à distance peut comprendre un convertisseur, connecté et/ou appairé aux capteurs fonctionnant de façon analogique, afin de transformer le signal généré par le capteur en signal numérique.

Le signal généré et communiqué par au moins un capteur est propre à fournir des informations relatives à la sécurité du passager situé dans la zone contrôlée à distance 1.

Le système de suivi à distance comprend en outre au moins un moyen d'interface 40. En particulier, le moyen d'interface 40 peut être situé à distance de la zone contrôlée à distance 1, afin de permettre au personnel de cabine d'avoir accès à des informations relatives à la zone contrôlée à distance 1 et/ou au passager à partir d'au moins un signal généré et communiqué par au moins un capteur de l'organe de contrôle 30.

Selon un mode de réalisation élémentaire, le moyen d'interface 40 peut être un simple pictogramme lumineux et/ou un simple voyant et/ou une simple sirène indiquant au personnel de cabine qu'une intervention, notamment de vérification, est à réaliser dans la zone contrôlée à distance 1.

Selon un autre mode de réalisation, le moyen d'interface 40 comprend, par exemple, au moins un moyen d'affichage. Il peut s'agir d'au moins un dispositif numérique à écran, tel qu'un écran de contrôle, avantageusement configuré pour être installé sur le pont supérieur 12 dans une zone de travail du personnel de cabine et/ou à proximité de sièges destinés à ces derniers. Il peut encore s'agir d'au moins dispositif mobile, tel qu'une tablette numérique, un assistant personnel, un dispositif portable, comme une montre portée par le personnel de cabine. Autrement dit, dans cette alternative de l'invention, le moyen d'interface 40 n'est pas ou à tout le moins pas seulement un simple pictogramme lumineux et/ou un simple voyant et/ou une simple sirène.

Le moyen d'interface 40 peut être configuré pour être partagé par différents membre du personnel de cabine. A cet effet, il peut, en particulier, en outre comprendre au moins un moyen pour émettre au moins une alerte sonore et/ou visuelles et/ou vibratoire, notamment de manière à attirer l'attention du personnel de cabine dans le but que ces derniers sachent qu'un événement mérite qu'il consulte le moyen d'interface 40, en particulier en détail et avec attention, et/ou qu'il se rende directement ou intervienne, par exemple à des fins de vérification, dans la zone contrôlée à distance 1 .

Par ailleurs, préférentiellement, le système de suivi à distance est configuré pour mettre à jour les informations relatives à la zone contrôlée à distance 1 et/ou au passager à partir d'au moins un signal généré et communiqué par au moins un capteur de l'organe de contrôle 30 en permanence. Autrement dit, même en absence d'un changement du signal généré et communiqué par au moins un capteur de l'organe de contrôle 30 et contribuant aux informations relatives à la zone contrôlée à distance 1 et/ou au passager, le personnel de cabine peut suivre les informations mises à disposition par le moyen d'interface 40 avec l'assurance que les informations sont à jour et reflètent la situation relatives à la zone contrôlée à distance 1 et/ou au passager en temps réel, c'est-à-dire de façon analogue aux informations dont le personnel de cabine peut disposer si il était présent dans la zone contrôlée à distance 1 et/ou à proximité du passager. Autrement dit, même en absence d'anomalie à communiquer au personnel de cabine, le moyen d'interface 40 est actif ou activable, notamment suite à une commande du personnel de cabine, pour permettre au personnel de cabine d'effectuer un travail de suivi à distance. Dans une telle configuration, le moyen d'interface 40 signale en l'occurrence une situation normale.

Additionnellement, le système de suivi à distance peut comprendre des moyens de traitement 50, notamment des moyens de traitement numériques 50. Les moyens de traitement 50 permettent de transmettre le signal généré et communiqué par au moins un capteur de l'organe de contrôle 30. La transmission du signal par les moyens de traitement 50 se fait préférentiellement sous forme de données numériques. La transmission du signal par les moyens de traitement 50 se fait vers le moyen d'interface 40, de préférence en temps réel.

Les moyens de traitement 50 sont, par exemple, centralisés sous la forme d'une unité de traitement, tel qu'un microprocesseur. Avantageusement, l'unité de traitement est commune à tous les capteurs et au moyen d'interface 40. L'unité de traitement reçoit les signaux numériques en provenance des capteurs, assure leur traitement pour générer les informations relatives à la zone contrôlée à distance 1 et/ou au passager à communiquer et les transmet au moyen d'interface sous forme de données à afficher, préférentiellement à destination du personnel de cabine.

Le système de suivi à distance peut encore comprendre un réseau de transmission 60 permettant une communication :
- du signal entre l'organe de contrôle 30 et les moyens de traitement 50, et/ou
- des informations relatives à la zone contrôlée à distance 1 et/ou au passager entre les moyens de traitement 50 et le moyen d'interface 40.

Le réseau de transmission 60 peut être, par exemple, un réseau filaire, électrique et/ou optique et/ou sans fil, notamment un réseau fonctionnant avec un protocole suivant les normes de protocoles de communication sans fil adaptées au transport aérien.

Par ailleurs, le réseau de transmission 60 peut être indépendant ou utiliser toute ou partie des éléments d'un réseau de communication existant dans l'avion.

Différentes situations de dangers que le présent mode de réalisation du système de suivi conforme à l'invention permet de traiter ainsi que le fonctionnement du système de suivi conforme à l'invention et le matériel associé vont maintenant être détaillés.

Dans une situation de turbulences, le système de suivi à distance est configuré pour que l'organe de contrôle 30 permette de détecter, au moins :
- l'état verrouillé de la ceinture de sécurité 26, et/ou
- la présence d'un passager assis sur un siège ou allongé sur une couchette équipée de la ceinture de sécurité 26 et apte à être retenu par la ceinture de sécurité 26.

Par ailleurs, en cas de présence de plusieurs passagers dans la zone contrôlée à distance 1, le système de suivi à distance est configuré pour que l'organe de contrôle 30 permettent de détecter, pour chaque passager individuellement :
- l'état verrouillé de la ceinture de sécurité 26, et/ou
- la présence d'un passager assis sur un siège équipé de la ceinture de sécurité 26 et apte à être retenu par la ceinture de sécurité 26.

Ainsi, le système de suivi à distance est configuré pour que l'organe de contrôle 30 permette de transmettre l'information selon laquelle le passager est en sécurité, respectivement tous les passagers sont en sécurité.

Pour cela, selon un mode spécifique de réalisation, le système de suivi à distance comprend au moins une ceinture connectée, par exemple associée respectivement au module de couchage 20. Par « ceinture connectée », on entend une ceinture de sécurité 26 équipée d'organes de contrôle qui peuvent être, par exemple :
- des capteurs de contact 31, notamment prévus au niveau d'une boucle de la ceinture de sécurité 26, pour établir l'état « verrouillé » ou « déverrouillé » de la ceinture de sécurité 26, et/ou
- des capteurs de présence, et/ou
- de capteurs de force, tels que des jauges de contrainte ou capteurs d'effort pour établir la présence d'un passager derrière la ceinture de sécurité 26.

Dans l'exemple illustré, une jauge de contrainte 32 a été disposée entre la base 22 et le matelas 24 dans ce but.

En complément ou en remplacement, un bouton de signalisation, non illustré sur la figure, peut être utilisé en tant qu'organe de contrôle 30 conforme à l'invention. Le bouton de signalisation est apte à permettre au passager de confirmer que la ceinture de sécurité 26 du siège sur lequel il est assis est correctement verrouillée. Le bouton de signalisation est avantageusement connecté aux moyens de traitement 50. Il peut s'agir d'un bouton de signalisation dédié à cette fonction ou d'un bouton de signalisation servant à d'autres fonctions telles que servir d'interrupteur pour des voyants lumineux et/ou encore d'autres fonctions évoquées dans la suite de la description.

Dans une situation de dépressurisation, en particulier de la zone contrôlée à distance 1, le système de suivi à distance est configuré pour établir que le passager est en sécurité. Une telle mise en sécurité peut se faire, en particulier, par le port pas le passager du masque à oxygène 28 prévu à cet effet. En particulier, le système de suivi à distance est configuré pour établir que le passager, respectivement tous les passagers, a pu s'équiper d'un masque à oxygène 28. De plus, avantageusement, le système de suivi à distance est configuré pour établir que le masque à oxygène 28 porté par le passager, est correctement ajusté.

A cette fin, dans un exemple de réalisation, le masque à oxygène 28 est prévu, avantageusement à proximité du module de couchage 20, dans un logement 29 susceptible de s'ouvrir en en cas de dépressurisation et de permettre que le masque à oxygène 28 tombe par gravité du logement 29.

Plus généralement, la zone contrôlée à distance 1 comprend au moins une unité de distribution d'oxygène munie d'un ou plusieurs masques à oxygène 28. Préférentiellement, une unité de distribution d'oxygène comprenant un ou plusieurs masques à oxygène 28 est prévue pour chaque unité de couchage 20. D'autres unités de distribution d'oxygène peuvent être prévues dans d'autres localisations de la zone contrôlée à distance 1, telles que, par exemple, des allées de circulation et/ou d'autres points de localisation où le passager est susceptible de passer ou de stationner. Les unités de distribution d'oxygène sont configurées pour libérer et expulser les masques à oxygène automatiquement en cas de dépressurisation.

Pour s'assurer de la sécurité du passager, au moins une des indications suivantes est exploitée :
- activation/désactivation du masque à oxygène 28, et/ou
- utilisation/non-utilisation du masque à oxygène 28, et/ou
- présence du passager dans la zone contrôlée à distance 1.

L'organe de contrôle 1 servant à établir si le masque à oxygène 28 a été activé ou non comprend, par exemple, au moins un capteur agencé sur le masque à oxygène 28 et/ou dans l'unité de distribution d'oxygène associée. Dans ce cas, il peut s'agir, par exemple, d'une jauge de contraintes 33, ou d'un capteur d'effort 33, permettant d'établir qu'un passager a activé le masque à oxygène 28, notamment en tirant sur le masque à oxygène 28, afin de permettre une distribution d'oxygène et est supposé avoir revêtu le masque à oxygène 28.

Sur un autre mode de réalisation, l'organe de contrôle 1 servant à établir si le masque à oxygène 28 est utilisé ou non comprend, par exemple, au moins un capteur agencé sur le masque à oxygène 28 et/ou dans l'unité de distribution d'oxygène associée. Dans ce cas, il peut s'agi, par exemple, d'un capteur de débit de gaz, permettant d'établir qu'un passager respire l'oxygène délivré par le masque à oxygène 28.

L'organe de contrôle 1 servant à établir si au moins un passager est présent comprend, par exemple, au moins un capteur disposé dans la zone contrôlée à distance 1, notamment dans l'unité de couchage et/ou à proximité d'une entrée de la zone contrôlée à distance 1. Avantageusement, l'organe de contrôle 1 servant à établir si au moins un passager est présent comprend plusieurs capteurs disposés à différents endroits de la zone contrôlée à distance 1.

A titre d'exemple, il peut s'agir d'un simple comptage des passagers ou encore d'une information individualisée, voire d'une identification des passagers concernés. L'organe de contrôle 1 comprend, par exemple, au moins un capteur de présence, tels que les capteurs de présence de la ceinture de sécurité 26 évoqués précédemment, et/ou la jauge de contraintes 32 servant à établir la présence d'un passager derrière la ceinture de sécurité 26. Il peut également s'agir de jauges de contraintes ou de capteurs d'effort disposés en divers endroits de la zone contrôlée à distance 1.

En complément ou en remplacement, un bouton de signalisation, non illustré sur la figure, peut être utilisé en tant qu'd'organe de contrôle 30 conforme à l'invention. Le bouton de signalisation est apte à permettre au passager de confirmer que le masque à oxygène 28 est activé et fonctionnel et qu'il est en sécurité en cas de dépressurisation. Le bouton de signalisation est avantageusement connecté aux moyens de traitement 50. Il peut s'agir d'un bouton de signalisation dédié à cette fonction ou d'un bouton de signalisation servant à d'autres fonctions telles que servir d'interrupteur pour des voyants lumineux et/ou d'autres fonctions évoquées dans la présente description.

L'organe de contrôle 1 servant à établir si au moins un passager est présent comprend, alternativement ou cumulativement, à titre d'exemple, au moins un portique de comptage. Dans un tel agencement, le portique de comptage peut être situé à l'entrée de la zone contrôlée à distance 1.

Par ailleurs, l'organe de contrôle 1 servant à établir si au moins un passager est présent comprend, alternativement ou cumulativement, par exemple, au moins un dispositif de communication, en particulier un dispositif de communication à champs proches, tels qu'un lecteur de puces RFID associé à au moins une puce RFID portée par le passager. L'organe de contrôle 1 peut ainsi permettre d'établir la présence d'un passager dans la zone contrôlée à distance 1, de façon anonyme et/ou par identification du passager.

De plus, l'organe de contrôle 1 servant à établir si au moins un passager est présent comprend, alternativement ou cumulativement, par exemple, au moyen de capture de présence, tel qu'une caméra. Idéalement, le moyen de capture de présence est associé à au moins un moyen de traitement d'images comme cela sera développé plus bas. Alternativement, le moyen de capture de présence peut être un capteur laser ou de type sonar.

En cas de menaces provenant du passager présent dans la zone contrôlée à distance 1, le système de suivi à distance est configuré pour détecter et/ou identifier une telle situation, notamment une attitude inappropriée du passager ou toutes autres situations mettant en péril les passagers telles qu'une attaque terroriste ou un détournement de l'avion.

L'organe de contrôle 30 servant à établir l'existence d'une telle menace comprend, par exemple, au moins :
- un dispositif de détection de mouvement, et/ou
- un dispositif d'enregistrement d'images 34, tel qu'une caméra 34, et/ou
- un dispositif d'enregistrement de sons 35, tel qu'un microphone 35.

Les dispositifs identifiés dans la présente description sont configurés pour former individuellement ou en combinaison un dispositif d'enregistrement des informations relatives à la zone contrôlée à distance 1 et/ou au passager à partir du signal généré et communiqué par au moins un capteur de l'organe de contrôle 30.

De façon complémentaire ou alternative, le système de suivi à distance est configuré pour que le dispositif d'enregistrement des informations relatives à la zone contrôlée à distance 1 et/ou au passager transmette le signal relatif à la zone contrôlée à distance 1 et/ou au passager, à savoir les images et/ou les sons enregistrés et/ou des informations de présence, en particulier en cas de mouvement, au moyen d'interface 40. Ainsi, le moyen d'interface 40 est apte à permettre de, notamment, visualiser les images et/ou d'entendre les sons de la zone contrôlée à distance 1, ceci avantageusement sans traitement.

En variante, le système de suivi à distance comprend en outre des moyens d'analyse des informations relatives à la zone contrôlée à distance 1 et/ou au passager, notamment des images et/ou des sons. Les moyens d'analyse des informations relatives à la zone contrôlée à distance 1 et/ou au passager permettent de caractériser, notamment en s'appuyant sur des modèles préétablis, des situations particulières.

Le dispositif de détection de mouvement comprend, par exemple, au moins un capteur de mouvement optique 37 et/ou au moins un capteur de mouvement à microonde 38 et/ou au moins un capteur de mouvement acoustique, notamment un capteur à ultra-sons.

Le dispositif d'enregistrement d'images 34 peut être, notamment, au moins une caméra 34 fonctionnant dans le spectre visible et/ou au moins une caméra à infra-rouge, en particulier associée à un dispositif d'éclairage infra-rouge, et/ou au moins une caméra thermique. Les caméras utilisées comprennent des caméras 2D et/ou des caméras 3D, par exemple dans le but d'établir le positionnement en profondeur du passager et/ou d'un objet présent dans la zone contrôlé à distance 1. Les signaux générés par les caméras peuvent prendre la forme de matrice de données associant à des pixels décomposant la ou les images enregistrées des niveaux de gris ou de couleurs, par exemple RGB, éventuellement complété par une valeur de profondeur dans le cas de caméras 3D.

Le dispositif d'enregistrement de sons 35 peut être, par exemple, au moins un microphone dynamique et/ou à condenseur. Le dispositif d'enregistrement de sons 35 peut être unidirectionnel, bidirectionnel, cardioïde et/ou omnidirectionnel. Par ailleurs, le dispositif d'enregistrement de sons 35 peut également être au moins un microphone stéréo. Un tel microphone stéréo permet de contribuer à la localisation de la source sonore, alternativement des sources sonores. Enfin, le dispositif d'enregistrement de sons 35 peut encore être configuré pour capter des sons correspondant à des fréquences sonores dédiées et/ou en dehors de fréquences sonores dédiées et/ou en dehors de telles fréquences.

L'organe de contrôle 30 formant le dispositif d'enregistrement est positionné dans la zone contrôlée à distance 1 de manière à couvrir l'ensemble de la zone contrôlée à distance 1 ou, à tout le moins, des parties définies, par exemples celles déterminées comme les plus sensibles, de la zone contrôlée à distance 1, avantageusement de façon redondante et/ou sous différents angles de vue.

Les moyens d'analyse d'informations relatives à la zone contrôlée à distance 1 et/ou au passager sont configurés, par exemple, pour isoler le visage du passager et/ou identifier, à partir des données récoltées par le dispositif d'enregistrement, des expressions de visage du passager afin d'en déduire au moins une information relative au passager. De telles expressions de visage du passager peuvent retranscrire une douleur, un stress, un sentiment panique, une colère, une peur, une absence de réaction et/ou toute autre expression pouvant correspondre à une situation de menace, de péril ou de danger.

De façon complémentaire ou alternative, les moyens d'analyse d'informations relatives à la zone contrôlée à distance 1 et/ou au passager sont configurés, par exemple, pour identifier et/ou détecter des objets considérés comme dangereux tels que des armes à feux, des objets tranchants ou plus généralement tout objet contondant ou dangereux. Egalement, les moyens d'analyse d'informations relatives à la zone contrôlée à distance 1 et/ou au passager peuvent être configurés, par exemple, pour identifier et/ou détecter des substances chimiques et/ou toxiques ou encore des réservoirs contenant des matières inflammables et/ou du gaz. Par ailleurs, les moyens d'analyse d'informations relatives à la zone contrôlée à distance 1 et/ou au passager peuvent être configurés, par exemple, pour identifier et/ou détecter une émanation de substance toxique et/ou une fumée.

De façon complémentaire ou alternative, les moyens d'analyse d'informations sont configurés, par exemple, pour identifier des comportements anormaux du passager ou d'un groupe de passagers. Cela peut, par exemple, être un regroupement de passagers se regroupant, un comportement agité d'un passager. Cela peut également, par exemple, être une détection d'un comportement a priori non naturelle, notamment le passager s'accroupissant, s'allongeant, tombant ou tout autre comportement considéré a priori suspect. Enfin, cela peut encore s'agir d'un comportement révélant un état d'ébriété de la part du passager ou tout autre comportement inapproprié pour un passager dans un avion.

En fonction des données établies grâce aux moyens d'analyse d'informations, le système de suivi à distance est configuré, par exemple, pour que le moyen d'interface 40 génère, en particulier, au moins une indication, notamment sous la forme de code couleur et/ou de texte, relative à la situation identifiée, éventuellement complétés d'une image de la ou des scènes pertinentes. Selon un exemple de réalisation, ces indications peuvent être réalisées en réalité augmentée, par exemple surlignage de contours, apparition de fenêtre de texte en surimpression d'images écran ou autre.

Notamment, dans ce but, les moyens d'analyse d'informations, en particulier d'images, relatives à la zone contrôlée à distance 1 et/ou au passager sont configurés, par exemple, pour effectuer une comparaison entre le contenu d'au moins une des images relevées par le dispositif d'enregistrement d'images 34 et une ou des images de référence, en particulier
- pour établir un changement de situation, et/ou de comportement, et/ou
- pour détecter une forme et/ou une température,
- pour déterminer les expressions d'un visage et/ou un état de stress et/ou d'apathie, et/ou
- pour détecter une présence d'un objet dangereux, et/ou
- pour détecter un mouvement, ... notamment par comparaison entre elles d'images enregistrées par le dispositif d'enregistrement d'images 34 à différents moments, en particulier pour établir des comportements inattendus. Autrement dit, les moyens d'analyse d'informations sont configurés pour détecter des objets particuliers, une forme humaine, un visage, des expressions du visage et/ou pour effectuer une localisation de passagers et/ou d'objets.

Les moyens d'analyse d'informations, en particulier de sons, sont configurés, par exemple, pour
- effectuer une détection de fréquence et/ou d'amplitude, et/ou
- caractériser une situation particulière, telle que qu'une situation de panique et/ou une situation de stress, et/ou
- pour détecter des tons de voix et/ou des bruits particuliers.

Il peut s'agir de cris, de plaintes, de gémissements, de pleurs ou autres. Il peut aussi s'agir d'éclats de voix, de tons menaçants ou autres. Il peut encore s'agir de bruits particuliers générés par des objets, tels que des armes à feux que l'on charge, des coups de feu, des explosions, des bruits de chutes d'objet et/ou de passagers ou autres. En complément ou alternativement, les moyens d'analyse d'informations sont configurés, par exemple, pour permettre une écoute et/ou une compréhension et/ou une interprétation des sons captés dans la zone contrôlée à distance 1.

L'organe de contrôle 30 peut comprendre en outre avantageusement un bouton d'alerte.

Le bouton d'alerte peut être le même que le bouton de signalisation déjà évoqué. Le bouton d'alerte peut également être un bouton spécifique afin de clairement associer une activation du bouton d'alerte à une situation de menace et/ou nécessitant une intervention et/ou une présence du personnel de cabine.

Le bouton d'alerte permettra ainsi à un passager de demander la présence et/ou l'aide et/ou l'intervention du personnel de cabine, notamment s'il est témoin d'une situation de menace et/ou nécessitant une intervention et/ou une présence du personnel de cabine. Un ou plusieurs boutons d'alerte spécifiques peuvent encore être prévus et mis à disposition du passager, chaque bouton correspondant respectivement à un niveau de menace ressentie par le passager.

Le bouton d'alerte est localisé, par exemple, sur un plafond et/ou une paroi du module de couchage. Le bouton d'alerte peut également être localisé, par exemple, sur un plafond et/ou une paroi des toilettes situées dans la zone contrôlée à distance 1 ou des zones de passage de la zone contrôlée à distance 1. Le bouton d'alerte peut en outre être intégré à des dispositifs de divertissement pendant le vol, tels que des zones d'un écran tactile, par exemple des zones activées dynamiquement, notamment susceptible d'équiper le module de couchage.

Le bouton d'alerte peut être connecté à des mêmes composants du moyen d'interface 40 et/ou du moyens de traitement 50 que le ou les autres organes de contrôle 30 ou à des composants spécifiques, en particulier afin d'assurer une redondance.

Une activation du bouton d'alerte génère, par exemple, l'affichage et/ou la diffusion d'un message à l'intention du personnel de cabine par le moyen d'interface 40.

En cas de difficulté d'ordre médical, notamment du passager présent dans la zone contrôlée à distance 1, le système de suivi à distance peut exploiter l'organe de contrôle déjà décrit et/ou plusieurs organes de contrôle déjà décrits et/ou des organes de contrôle spécifiques tels qu'au moins un capteur de données médicales 39, comme, par exemple, un capteur physiologique, tel que, en particulier, un dispositif de détection du rythme cardiaque. Le capteur de données médicales 39 peut être disposé ou intégré dans la zone contrôlée à distance 1, alternativement à la cabine, ou porté par le passager, tel qu'un bracelet ou une montre connecté.

Le système de suivi à distance peut également exploiter les moyens d'analyse d'informations, en particulier d'images et/ou de sons, pour participer à la détection d'une situation nécessitant une réaction de nature médicale. Une telle situation peut, par exemple être identifiée par une détection d'une respiration trop forte, d'une suffocation, de cris de douleur, de gémissements ou de plaintes du passager. Elle peut, de façon complémentaire ou en alternative, être encore identifiée par une détection d'images d'une chute, d'une blessure, d'un saignement, d'une suffocation ou autre du passager.

Le système de suivi à distance peut aussi exploiter, de façon alternative ou complémentaire, le bouton d'alerte, éventuellement adapté pour permettre au passager de spécifier une nature médicale de l'alerte. Un ou plusieurs boutons d'alerte spécifiques peuvent encore être mis à disposition du passager, chaque bouton correspondant respectivement à un type particulier de situation. Le bouton peut servir à transmettre un message de demande d'assistance, soit par le passager atteint ou par un passager témoin de la situation.

Le moyen d'interface 40 peut également être adapté pour établir des indications d'ordre médicale à partir des informations reçues, notamment à l'intention d'un médecin, au cas où il s'en trouverait un à bord, ou, dans une version adaptée, à l'intention du personnel de bord.

Le système de suivi à distance peut, en outre, comprendre un centre de suivi, embarqué et/ou à terre, des indications d'ordre médicale. A cet effet, le système de suivi à distance comprend des moyens de transmission des indications d'ordre médicale au centre de suivi, par exemple depuis le moyen d'interface 40 et/ou depuis les moyens de traitement, en exploitant les informations collectées à bord de l'avion.

Alternativement ou complémentairement, le système de suivi à distance, en particulier le moyen d'interface 40, peut également être adapté pour établir, directement ou indirectement, une communication pour pouvoir obtenir un diagnostic de la part d'une personne, notamment un médecin, se trouvant au sol.

De même, pour des situations présentant un caractère périlleux, le système de suivi peut exploiter les composants déjà décrits, notamment le ou les capteurs et/ou bouton et/ou le ou les signaux générés et communiqués par le ou les capteurs et/o le ou les boutons éventuellement adaptés, et/ou des composants spécifiques. Le système de suivi à distance est, en particulier, configuré pour tenir compte de la présence de substances ou de produits dangereux, de l'occurrence d'un feu, d'un dégagement de fumée, de dispersion d'un fluide dangereux ou autre.

Bien sûr, pour limiter un tel risque, les matériaux utilisés pour équiper la zone contrôlée à distance 1 comprennent, de préférence, des matières ignifugées. Par ailleurs, le passager aura été informé préalablement de la conduite à tenir. Cela étant, le système de suivi à distance contribuera à une réaction rapide et approprié permettant de limiter les dommages causés.

L'organe de contrôle 30 peut comprendre, en ce sens, au moins un capteur de détection de fumée et/ou au moins un analyseur de gaz et/ou au moins un capteur de température 36 ou tout autre capteur permettant la détection de situations présentant un caractère périlleux, notamment la présence de substances ou de produits dangereux, de l'occurrence d'un feu, d'un dégagement de fumée, de dispersion d'un fluide dangereux ou autre. Une caméra thermique peut également être utilisée.

Dans ces différentes situations, le moyen d'interface 40 est, par exemple, configuré pour définir différents niveaux d'alerte correspondant, notamment, aux différents types de réaction à mettre en oeuvre par le personnel de cabine. Les types de réactions sont, par exemple :
- visualisation à l'écran de la zone contrôlée à distance 1 pour une alerte de niveau faible, et/ou
- visite de la zone contrôlée à distance 1 pour une alerte de niveau plus élevé, et/ou
- évacuation de la zone contrôlée à distance 1 pour une alerte de niveau élevé, et/ou
- activation d'organes de sécurité, notamment d'extincteurs de feu prévus dans la zone contrôlée à distance pour les situations appropriées.

Le moyen d'interface 40 peut encore, par exemple, être configuré pour délivrer une liste des passagers présents et/ou un message de confirmation attestant l'absence de passagers dans la zone contrôlée à distance 1, ceci notamment à partir des données délivrés par les moyens de traitement 50.

Il sera en outre avantageux d'utiliser des fonctionnalités dudit système de suivi à distance, éventuellement en combinaison avec d'autres fonctionnalités, afin d'assurer un accueil et un confort appropriés du passager dans la zone contrôlée 1 par le système de suivi à distance.

Pour cela, le système de suivi à distance peut, par exemple, comprendre des moyens de communication permettant au personnel de cabine de se mettre en contact à distance avec le passager présent dans la zone contrôlée à distance 1. Les moyens de communication comprennent, par exemple, des moyens de diffusion audio et/ou vidéo 70, notamment un écran 70. Les moyens de communication peuvent être configurés pour diffuser des informations aux passagers individuellement, à un groupe de passagers ou à l'ensemble des passagers.

Les moyens de communication peuvent être, par exemple, configurés pour fonctionner de façon automatique et/ou à l'initiative du personnel de cabine et/ou en interaction entre le passager présent dans la zone contrôlée à distance 1 et le personnel de cabine, notamment sous un mode d'interphonie. Les moyens de communication sont destinés à émettre, par exemple, des images et/ou des messages à but informatif, pour rassurer les passagers, notamment leur indiquer qu'un membre du personnel de cabine a été alerté et/ou est sur le point de se rendre dans la zone contrôlée à distance 1, pour leur apporter des conseils, leur donner des instructions et/ou des consignes. Les images et/ou messages émis sont préenregistrés et/ou diffusés en direct par le personnel de cabine.

En cas de fonctionnement automatique, les moyens de communication sont, par exemple, configurés pour être activés après identification d'une situation particulière par les moyens d'analyse d'informations et/ou une activation du bouton de signalisation et/ou du bouton d'alerte.

Les moyens de communication peuvent encore être configurés pour transmettre un message demandant la confirmation des informations reçues, notamment dans le cas d'informations de nature médicale et/ou de demande d'assistance, en particulier au passager ayant activé le bouton d'alerte.

Cela étant, il peut en particulier être prévu un dispositif d'enregistrement d'images 34 par couchette. Dans une telle hypothèse, le système de suivi à distance peut comprendre des moyens d'activation/désactivation du dispositif d'enregistrement d'images 34. Par exemple, les moyens d'activation/désactivation sont configurés, dans un mode normal, pour autoriser le fonctionnement du dispositif d'enregistrement d'images 34, après autorisation donnée par le passager utilisant la couchette. A cet effet, l'autorisation peut être obtenue à l'aide de l'un des boutons déjà évoqués, et/ou tout autre dispositif de validation. Dans un mode d'urgence, le système de suivi à distance peut être configuré, par exemple, pour forcer l'activation et la mise en fonctionnement du dispositif d'enregistrement d'images 34, en particulier avec ou sans l'autorisation du passager.

Les moyens de communication peuvent, en outre, comprendre au moins un dispositif d'alarme diffusant un message adapté à tout ou partie des passagers pour les avertir de l'existence et/ou de la nature d'une menace et/ou pour leur demander d'évacuer la zone contrôlée à distance 1. Le système de suivi à distance est configuré pour que le dispositif d'alarme soit activé, par exemple, à l'initiative d'un personnel de cabine, en cas de situations particulières, établies par les moyens d'analyse des informations relatives à la zone contrôlée à distance 1 et/ou en cas d'actionnement du bouton d'alerte et/ou du bouton de signalisation.

Dans un mode particulier de réalisation, le système de suivi à distance est configuré pour que le moyen d'interface 40 propose une émission d'une alarme en cas de situation particulière en fonction du signal généré et communiqué par au moins un organe de contrôle 30 et/ou de l'activation d'un ou plusieurs boutons d'alerte et/ou d'un ou plusieurs boutons de signalisation. Le personnel de cabine est alors libre ou non d'activer le dispositif d'alarme.

Dans un autre mode de réalisation, le système de suivi à distance susceptible d'être configuré pour que le dispositif d'alarme soit activé en fonction du signal généré et communiqué par au moins un organe de contrôle 30 et/ou de l'activation d'un ou plusieurs boutons d'alerte et/ou d'un ou plusieurs boutons de signalisation, sans intervention d'un personnel de cabine et/ou confirmation d'un certain degré de menace par les moyens d'analyse des informations relatives à la zone contrôlée à distance 1 et/ou au passager.

Le dispositif d'alarme comprend, par exemple, des organes de sortie de même nature que le moyen d'interface à destination du personnel de cabine. Les organes de sortie peuvent être, par exemple, situées notamment à proximité immédiate des boutons de signalisation.

Le système de suivi à distance est, par exemple, configuré pour que les moyens de communication, en particulier le dispositif d'alarme, puissent être contrôlés par le personnel de cabine, notamment à l'aide du moyen d'interface 40 ou de composants spécifiques.

Les moyens de communication peuvent, en outre, comprendre des voyants et/ou fléchage lumineux, des écrans et/ou des dispositifs de diffusion sonores configurés pour être activé à l'entrée du passager dans la zone contrôlée à distance 1 afin de lui indiquer l'emplacement qui lui est destiné.

Le système de suivi à distance comprend, en outre, un système d'alimentation de l'organe de contrôle 30 et/ou du moyen d'interface 40 et/ou des moyens de traitement 50. A cet effet, le système d'alimentation peut être constitué par le réseau de transmission 60, configurés pour également faire circuler un courant d'alimentation. Avantageusement, le système d'alimentation est autonome et indépendant de tout autre système d'alimentation de l'avion.

Bien évidemment, l'invention n'est pas limitée aux modes de réalisation décrits précédemment et fournis uniquement à titre d'exemple. Elle englobe diverses modifications, formes alternatives et autres variantes que peut envisager l'homme du métier dans le cadre de la présente invention telle que revendiquée.

## Revendications

1. Système de suivi à distance d'une zone (1) cargo aménagée pour accueillir au moins un passager d'un avion comprenant :
- au moins un organe de contrôle (30), configuré pour générer au moins un signal relatif à la sécurité du passager présent dans la zone (1), et
- au moins un moyen d'interface (40) destiné à être situé à distance de la zone (1) et permettant à un personnel de cabine d'avoir accès à des informations relatives à la zone (1) et/ou au passager présent dans la zone (1) à partir du signal,
ledit système de suivi à distance étant **caractérisé en ce que** l'organe de contrôle (30) comprend au moins un capteur pris parmi :
- un capteur de contact, et/ou
- un capteur de présence, et/ou
- un capteur de force, et/ou
- un capteur micro-onde, et/ou
- un capteur de débit de gaz, et/ou
- un capteur corporel, notamment médical,
ledit au moins un capteur étant apte à générer le signal relatif à la sécurité du passager présent dans la zone (1), en particulier de vérifier l'état d'une ceinture du ou des passagers, de vérifier l'utilisation des masques à oxygène par le ou les passagers, de détecter l'occurrence d'une menace ou d'une situation périlleuse pour le ou les passagers et/ou de suivre la santé du ou des passagers.

2. Système de suivi à distance selon la revendication précédente, dans lequel le moyen d'interface (40) comprend au moins un moyen d'affichage, notamment comprenant au moins un dispositif numérique à écran.

3. Système de suivi à distance selon l'une quelconque des revendications précédentes, dans lequel le moyen d'interface (40) comprend au moins un moyen pour émettre au moins une alerte sonore et/ou visuelles et/ou vibratoire.

4. Système de suivi à distance selon l'une quelconque des revendications précédentes, dans lequel le système de suivi à distance est configuré de façon à mettre à jour les informations relatives à la zone (1) et/ou au passager présent dans la zone (1) en permanence.

5. Système de suivi à distance selon l'une quelconque des revendications, précédentes dans lequel le système de suivi à distance comprend en outre des moyens de traitement (50) permettant de transmettre le signal au moyen d'interface. (40).

6. Système de suivi à distance selon la revendication précédente dans lequel, ledit système de suivi à distance comprend un réseau de transmission (60) permettant une communication du signal entre l'organe de contrôle (30) et les moyens de traitement (50) et/ou des informations relatives à la zone contrôlée à distance 1 et/ou au passager entre les moyens de traitement (50) et le moyen d'interface (40).

7. Système de suivi à distance selon la revendication précédente, dans lequel le système de suivi à distance comprend en outre des moyens de traitement des informations relatives à la zone contrôlée à distance 1 et/ou au passager.

8. Système de suivi à distance selon l'une quelconque des revendications précédentes, dans lequel l'organe de contrôle (30) comprend un bouton d'alerte et/ou un bouton de signalisation.

9. Système de suivi à distance selon l'une quelconque des revendications précédentes, dans lequel des moyens de communication sont agencés pour permettre au personnel de cabine de se mettre en contact à distance avec le passager présentes dans la zone (1).

10. Système de suivi à distance selon la revendication précédente, dans lequel les moyens de communication sont configurés pour fonctionner de façon automatique, et/ou à l'initiative du personnel de cabine et/ou en interaction entre le passager présent dans la zone (1) et le personnel de cabine.

11. Système de suivi à distance selon l'une quelconque des revendications 9 ou 10, dans lequel les moyens de communication comprennent au moins un dispositif d'alarme diffusant un message adapté à tout ou partie des passagers.

12. Système de suivi à distance selon l'une quelconque des revendications 9 à 11, dans lequel les moyens de communication comprennent des indicateurs configurés pour être activés à l'entrée d'un passager dans la zone (1), notamment afin de lui indiquer l'emplacement qui lui est destiné.

13. Cabine d'avion comprenant un système de suivi à distance selon l'une quelconque des revendications précédentes.

## Patentansprüche

1. Fernüberwachungssystem für einen Frachtraumbereich (1), der zur Unterbringung von mindestens einem Flugzeugpassagier eingerichtet ist, umfassend:
- mindestens ein Kontrollorgan (30), das zum Erzeugen mindestens eines Signals bezüglich der Sicherheit des sich in dem Bereich (1) befindlichen Passagiers konfiguriert ist, und
- mindestens ein Schnittstellenmittel (40), das dafür vorgesehen ist, räumlich entfernt von dem Bereich (1) angeordnet zu werden, und das es einer Kabinenbesatzung ermöglicht, anhand des Signals auf Informationen zuzugreifen, die den Bereich (1) und/oder den in dem Bereich (1) anwesenden Passagier betreffen,
wobei das Fernüberwachungssystem **dadurch gekennzeichnet ist, dass** das Kontrollorgan (30) mindestens einen Sensor umfasst, und zwar ausgewählt aus:
- einem Berührungssensor, und/oder
- einem Anwesenheitssensor, und/oder
- einem Kraftsensor, und/oder
- einem Mikrowellensensor, und/oder
- einem Gasflusssensor, und/oder
- einem Körpersensor, insbesondere einem medizinischen Sensor,
wobei der mindestens eine Sensor in der Lage ist, das Signal bezüglich der Sicherheit des sich in dem Bereich (1) befindlichen Passagiers zu erzeugen, insbesondere den Zustand eines Sicherheitsgurts des oder der Passagiere zu überprüfen, die Benutzung von Sauerstoffmasken durch den oder die Passagiere zu überprüfen, das Auftreten einer Bedrohung oder einer gefährlichen Situation für den oder die Passagiere zu erkennen und/oder die Gesundheit des oder der Passagiere zu überwachen.

2. Fernüberwachungssystem nach dem vorstehenden Anspruch, wobei das Schnittstellenmittel (40) mindestens ein Anzeigemittel, insbesondere mindestens eine digitales Bildschirmgerät, umfasst.

3. Fernüberwachungssystem nach einem der vorstehenden Ansprüche, wobei das Schnittstellenmittel (40) mindestens ein Mittel zur Ausgabe mindestens eines akustischen und/oder optischen und/oder vibrierenden Alarmsignals umfasst.

4. Fernüberwachungssystem nach einem der vorstehenden Ansprüche, wobei das Fernüberwachungssystem so konfiguriert ist, dass es die Informationen, die den Bereich (1) und/oder den in dem Bereich (1) anwesenden Passagier betreffen, fortlaufend aktualisiert.

5. Fernüberwachungssystem nach einem der vorstehenden Ansprüche, wobei das Fernüberwachungssystem ferner Verarbeitungsmittel (50) zur Übertragung des Signals an das Schnittstellenmittel (40) umfasst. (40).

6. Fernüberwachungssystem nach dem vorstehenden Anspruch, wobei das Fernüberwachungssystem ein Übertragungsnetz (60) umfasst, das eine Übermittlung des Signals zwischen dem Kontrollorgan (30) und den Verarbeitungsmitteln (50) und/oder von Informationen, die den fernüberwachten Bereich 1 und/oder den Passagier betreffen, zwischen den Verarbeitungsmitteln (50) und dem Schnittstellenmittel (40) ermöglicht.

7. Fernüberwachungssystem nach dem vorstehenden Anspruch, wobei das Fernüberwachungssystem ferner Mittel zur Verarbeitung von Informationen umfasst, die den fernüberwachten Bereich 1 und/oder den Passagier betreffen.

8. Fernüberwachungssystem nach einem der vorstehenden Ansprüche, wobei das Kontrollorgan (30) eine Alarmtaste und/oder eine Signalgebungstaste umfasst.

9. Fernüberwachungssystem nach einem der vorstehenden Ansprüche, wobei Kommunikationsmittel so angeordnet sind, dass die Kabinenbesatzung mit dem in dem Bereich (1) anwesenden Passagier aus der Ferne Kontakt aufnehmen kann.

10. Fernüberwachungssystem nach dem vorstehenden Anspruch, wobei die Kommunikationsmittel so konfiguriert sind, dass sie automatisch und/oder auf Initiative der Kabinenbesatzung und/oder interaktiv zwischen dem in dem Bereich (1) anwesenden Passagier und der Kabinenbesatzung funktionieren.

11. Fernüberwachungssystem nach einem der Ansprüche 9 oder 10, wobei die Kommunikationsmittel mindestens eine Alarmvorrichtung umfassen, die eine entsprechende Nachricht an alle oder einen Teil der Passagiere sendet.

12. Fernüberwachungssystem nach einem der Ansprüche 9 bis 11, wobei die Kommunikationsmittel Indikatoren umfassen, die so konfiguriert sind, dass sie beim Betreten des Bereichs (1) durch einen Passagier aktiviert werden, insbesondere um ihm den für ihn vorgesehenen Platz zu nennen.

13. Flugzeugkabine mit einem Fernüberwachungssystem nach einem der vorstehenden Ansprüche.

## Claims

1. Remote monitoring system for an area (1) intended to accommodate at least one passenger of an aeroplane, comprising:
- at least one control member (30), configured to generate at least one signal relating to the safety of the passenger present in the area (1), and
- at least one interface means (40) intended to be situated at a distance from the area (1) and making it possible for a member of cabin crew to have access to information relating to the area (1) and/or to the passenger present in the area (1) on the basis of the signal,
said remote monitoring system being **characterized in that** the control member (30) comprises at least one sensor chosen among:
- a contact sensor, and/or
- a presence sensor, and/or
- a force sensor, and/or
- a microwave sensor, and/or
- a gas flow sensor, and/or
- a body sensor, notably medical,
said at least one sensor being capable of generating the signal relating to the safety of the passenger present in the area (1), in particular, to verify the status of a belt of the passenger, to verify the use of oxygen masks by the passenger, to detect the occurrence of a threat or of a dangerous situation for the passenger and/or to monitor the health of the passenger.

2. Remote monitoring system according to claim 1, wherein the interface means (40) comprises at least one display means, notably comprising at least one digital device with a screen.

3. Remote monitoring system according to any of the preceding claims, wherein the interface means (40) comprises at least one means to emit at least one audible and/or visual and/or vibratory alert.

4. Remote monitoring system according to any of the preceding claims, wherein the remote monitoring system is configured to permanently update the information relating to the area (1) and/or to the passenger present in the area (1).

5. Remote monitoring system according to any of the preceding claims, wherein said remote monitoring system further comprises processing means (50) making it possible to transmit the signal to the interface means (40).

6. Remote monitoring system according to the preceding claim, wherein said remote monitoring system comprises a transmission network (60) making it possible for communication of the signal between the control member (30) and the processing means (50) and/or information relating to the remotely controlled area and/or to the passenger between the processing means (50) and the interface means (40).

7. Remote monitoring system according to the preceding claim, wherein the remote monitoring system further comprises means for processing information relating to the remotely controlled area and/or to the passenger.

8. Remote monitoring system according to any of the preceding claims, wherein the control member (30) comprises an alert button and/or a signalling button.

9. Remote monitoring system according to any of the preceding claims, wherein the communication means are arranged to make it possible for the cabin crew to be put in contact with the passenger present in the area (1).

10. Remote monitoring system according to the preceding claim, wherein the communication means are configured to function automatically, and/or at the initiative of the cabin crew and/or in interaction between the passenger present in the area (1) and the cabin crew.

11. Remote monitoring system according to claim 9 or 10, wherein the communication means comprise at least one alarm device transmitting a message adapted to all or some of the passengers.

12. Remote monitoring system according to any of claim 9 to 11, wherein the communication means comprise indicators configured to be activated as the passenger enters the area (1), notably in order to indicate to them the place that is intended for them.

13. Aeroplane cabin comprising a remote monitoring system according to any of the preceding claims.
